# FASCICULE DE BREVET EUROPEEN

(11) **EP 1 920 990 B1**
(45) Date de publication et mention de la délivrance du brevet: **10.02.2010**
(21) Numéro de dépôt: 07291286.8
(22) Date de dépôt: 23.10.2007
(51) Int. Cl.: B62D 1/19

(54) **Colonne de direction de véhicule automobile**
Lenksäule eines Kraftfahrzeugs
Steering column of an automobile

(30) Priorité: 10.11.2006 FR 0609862
(43) Date de publication de la demande: 14.05.2008
(73) Titulaire: Fuji Autotech France SAS, 25350 Mandeure (FR)
(72) Inventeur: Cholley, Fabien, 25260 Montenois (FR)
(74) Mandataire: Blot, Philippe Robert Emile

(56) Documents cités:
- WO-A-2005/037627
- WO-A-2006/024407
- WO-A-2006/024459
- US-A- 3 827 710

## Description

L'invention concerne en général les colonnes de direction de véhicule automobile.

Plus précisément, l'invention concerne, selon un premier aspect, un ensemble de colonne de direction de véhicule automobile, du type comprenant :
- un arbre de direction d'axe longitudinal,
- un corps de colonne à l'intérieur duquel la colonne de direction est guidée en rotation autour de son axe, le corps de colonne comprenant des parties supérieure et inférieure alignées longitudinalement,
- une platine de fixation du corps de colonne sur une pièce de structure du véhicule, liée à la partie inférieure du corps de colonne,
- une bride de liaison entre la platine de fixation et la partie supérieure du corps de colonne.

Un bel ensemble est déjà décrit par le document WO 2006/024407.

Il est connu de prévoir qu'un tel ensemble de colonne de direction soit rétractable longitudinalement en cas de chocs, un premier sous-ensemble formé d'un tronçon de l'arbre de direction lié au volant, de la partie supérieure du corps de colonne et de la bride de liaison étant mobile vis-à-vis d'un second sous-ensemble comprenant la platine, un tronçon de l'arbre de direction lié aux roues et la partie inférieure du corps de colonne. Pour cette raison, la bride est typiquement liée à la platine par des moyens de fixation libérables du type emmanchement à force, coincement, arc-boutement, etc. Ces moyens de liaison sont peu rigides, de telle sorte que le comportement vibratoire de l'ensemble de colonne de direction n'est pas satisfaisant.

Dans ce contexte, l'invention vise à proposer un ensemble de colonne de direction présentant un meilleur comportement vibratoire.

A cette fin, l'invention porte sur un ensemble de colonne de direction du type précité, caractérisé selon la revendication 1 en ce que la platine de fixation comprend au moins deux pattes élastiques opposées disposées de part et d'autre de la bride et pinçant la bride entre elles.

L'invention porte également selon la revendication 9 sur un véhicule automobile comprenant un tel ensemble de colonne de direction;

L'ensemble de colonne de direction peut également présenter une ou plusieurs des caractéristiques ci-dessous, considérées individuellement ou selon toutes les combinaisons techniquement possibles :
- l'arbre de direction est rétractable, le corps de colonne comprenant une partie intermédiaire déformable interposée longitudinalement entre les parties supérieure et inférieure, l'ensemble comprenant des moyens libérables de fixation de la bride à la platine de fixation ;
- l'arbre de direction est lié au volant du véhicule par une extrémité supérieure, la bride comprenant une partie en saillie vers le volant par rapport à la platine, les pattes élastiques pinçant entre elles la partie en saillie de la bride ;
- la partie en saillie de la bride présente une section en U dans un plan perpendiculaire à l'axe longitudinal et chevauche la partie supérieure du corps de colonne, la partie en saillie comprenant une âme centrale et deux ailes opposées solidaires de l'âme centrale, les deux pattes élastiques étant appliquées contre les ailes ;
- les pattes s'étendent sensiblement longitudinalement, à partir d'un bord supérieur de la platine délimitant la platine vers le volant ;
- les pattes élastiques sont venues de matière avec la platine ;
- les pattes élastiques pincent la bride suivant une direction perpendiculaire à la direction longitudinale ; et
- les pattes élastiques pincent la bride suivant une direction transversale par rapport au sens de déplacement normal du véhicule.

Selon un second aspect, l'invention concerne un véhicule automobile comprenant un ensemble de colonne de direction présentant les caractéristiques ci-dessus.

D'autres caractéristiques et avantages de l'invention ressortiront de la description détaillée qui en est donnée ci-dessous, à titre indicatif et nullement limitatif, en référence aux figures annexées, parmi lesquelles :
- la figure 1 est une vue de côté d'un ensemble de colonne de direction de véhicule conforme à l'invention ;
- la figure 2 est une vue en perspective de la platine de fixation et de la bride de liaison de l'ensemble de la figure 1 ;
- la figure 3 est une vue en perspective de la bride de liaison de la figure 2; et
- la figure 4 est une vue en coupe de la platine de fixation et de la bride, considérée selon l'incidence des flèches IV de la figure 2.

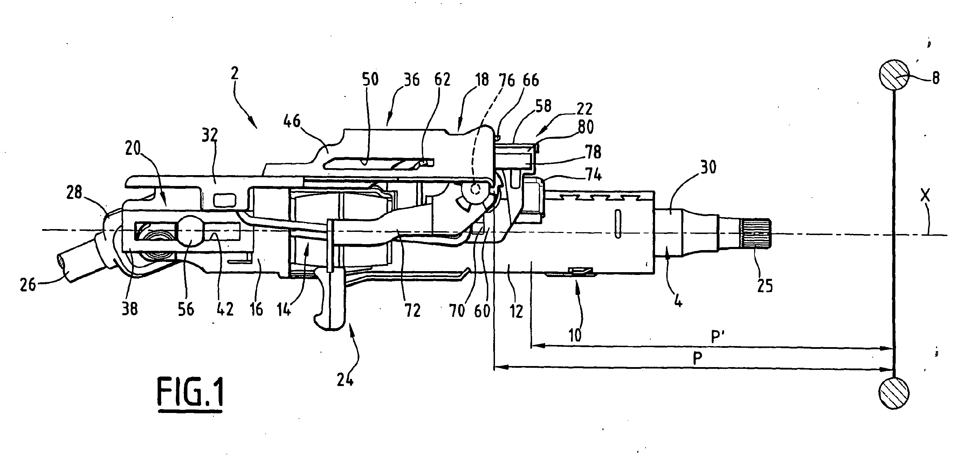

L'ensemble de colonne de direction 2 représenté sur la figure 1 comprend :
- un arbre de direction 4 d'axe longitudinal X, destiné à être lié en rotation au volant 8 du véhicule,
- un corps de colonne 10 à l'intérieur duquel la colonne de direction 4 est guidée en rotation autour de son axe X, le corps de colonne comprenant des parties supérieure 12, intermédiaire 14 et inférieure 16 alignées longitudinalement dans cet ordre,
- une platine 18 de fixation du corps de colonne 10 sur une pièce de structure du véhicule non représentée, et des moyens 20 de liaison de la platine de fixation 18 à la partie inférieure 16 du corps de colonne,
- une bride 22 de liaison entre la platine de fixation 18 et la partie supérieure 12 du corps de colonne, et
- des moyens 24 de réglage en position du corps de colonne 10 et de l'arbre de direction 4 par rapport à la platine 18.

Dans la description qui va suivre, la direction longitudinale sera donc entendue comme étant celle de l'axe de l'arbre de direction, la direction transversale, l'avant et l'arrière étant utilisés dans leur acceptation habituelle pour des véhicules automobiles.

L'arbre de direction 4 est destiné à être relié par son extrémité arrière et supérieure 25 au volant 8, et par une extrémité opposée à un dispositif 26 permettant de braquer les roues du véhicule automobile, par exemple par l'intermédiaire d'un cardan 28.

L'arbre de direction 4 est rétractable en cas de choc, suivant sa direction longitudinale. Pour ce faire, l'arbre de direction 4 comprend un premier tube supérieur 30 lié au volant et un tube inférieur (non représenté) lié aux roues, montés de façon télescopique l'un dans l'autre, chaque tube étant libre de coulisser suivant la direction longitudinale le long de l'autre tube. Les deux tubes sont solidarisés en rotation autour de l'axe X, par exemple à l'aide de cannelures non représentées.

Le corps de colonne 10 présente une forme générale tubulaire d'axe central longitudinal X. L'arbre de direction est guidé en rotation autour de l'axe longitudinal X, à l'intérieur du corps 10, par l'intermédiaire de moyens de guidage interposés entre l'arbre 4 et le corps 10, par exemple par des paliers à roulement (non représentés).

La partie supérieure 12 du corps de colonne est disposée vers le volant 8, la partie inférieure 16 étant disposée vers le cardan 28, la partie intermédiaire 14 étant disposée entre les parties supérieure et inférieure 12 et 16 et liant mécaniquement les parties 12 et 16.

La partie intermédiaire 14 se présente sous la forme de ponts venus de matière avec les parties supérieure et inférieure 12 et 16, et s'étendant longitudinalement entre les parties 12 et 16.

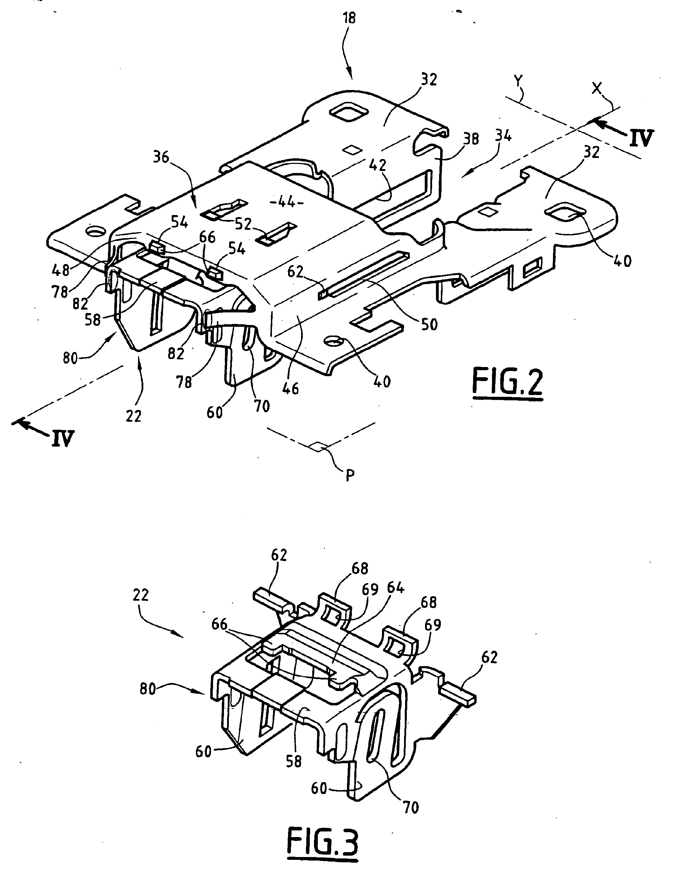

La platine 18 est une coque métallique, typiquement emboutie. Comme le montre la figure 2, elle comprend :
- deux parties latérales planes 32, disposées dans un même plan P sensiblement parallèle à la direction longitudinale, et définissant entre elles un canal longitudinal 34 de réception du corps de colonne 10,
- une partie centrale bombée 36 faisant saillie au-dessus du plan P, et s'étendant entre les deux parties latérales 32 en recouvrant une zone arrière du canal 34,
- deux bords dressés 38, en saillie au-dessous du plan P à partir des parties latérales 32, et s'étendant longitudinalement de part et d'autre d'une zone avant du canal 34.

Le plan P est parallèle aux directions longitudinale X et transversale Y. Par rapport au plan P, la partie bombée 36 fait saillie vers le haut et les bords dressés 38 vers le bas.

Les parties latérales 32 portent des orifices 40 de fixation de la platine à la structure du véhicule.

Les bords 38 sont pliés à angle droit par rapport aux parties latérales 32 et portent chacune une rainure longitudinale 42.

La partie bombée 36, considérée dans un plan perpendiculaire à la direction longitudinale, présente une section en U. Elle est délimitée, à son sommet, par une face supérieure 44 sensiblement plane et parallèle au plan P, et est reliée aux deux parties latérales 32 par deux faces 46 longitudinales et sensiblement perpendiculaires au plan P.

Les parties latérales 32 et la partie centrale 36 sont délimitées vers le volant par un bord supérieur plié 48 s'étendant dans un plan perpendiculaire à la direction longitudinale. Ce bord plié 48 s'étend vers le bas à partir des parties 32 et 36.

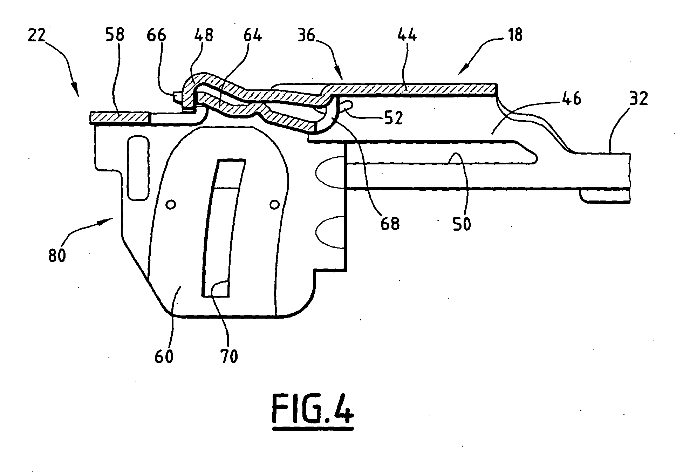

La partie bombée 36 porte deux rainures longitudinales 50 en vis-à-vis, ménagées dans les faces 46. Par ailleurs, deux languettes 52 sont découpées dans la face supérieure 44. Les languettes 52 sont pliées vers l'intérieur du canal 34, et pointent vers l'avant du véhicule, c'est-à-dire à l'opposé du volant 8 (figure 4). Le bord plié 48 porte le long de la face supérieure 44 deux orifices 54.

La partie inférieure 16 du corps de colonne porte des pions 56 engagés coulissants et pivotants dans les rainures 42 de la platine. Ces pions pointent transversalement, de part et d'autre de la partie 16 du corps de colonne. Les pions 56 et les rainures 42 constituent les moyens de liaison 20 entre la partie inférieure du corps de colonne et la platine.

Comme le montre la figure 1, le corps de colonne 10 s'étend le long du canal 34 de la platine.

La partie inférieure 16 est disposée entre les deux bords dressés 38. La partie intermédiaire 14 s'étend partiellement sous la partie bombée 36 de la platine et partiellement à l'avant de la partie bombée. La partie supérieure 12 du corps de colonne s'étend partiellement sous la partie bombée 36 et partiellement en saillie vers l'arrière par rapport au bord plié 48.

Comme le montre la figure 3, la bride 22 est une pièce en U disposée de manière à chevaucher la partie supérieure 12 du corps de colonne. Elle comporte une âme centrale 58 et deux ailes latérales 60 solidaires de l'âme centrale. L'âme centrale 58 est sensiblement parallèle au plan P. Les ailes 60 sont parallèles l'une à l'autre et s'étendent longitudinalement perpendiculairement au plan P.

La bride 22 est interposée entre le corps de colonne 10 et la partie bombée 36, son âme centrale étant tournée vers la face supérieure 44 et ses deux ailes 60 vers les faces latérales 46 de la partie bombée (figure 2).

La bride 22 porte deux ergots 62 faisant saillie transversalement par rapport aux ailes 60. Les ergots 62 sont engagés à force dans les rainures 50 et sont susceptibles de coulisser dans ces rainures sous l'effet d'un effort longitudinal important appliqué à la bride.

La bride 22 comprend également un voile 64 se dressant à partir de l'âme 58 vers la face supérieure 44 de la partie bombée et deux ergots de fixation arrière 66 pointant longitudinalement vers le volant, c'est-à-dire vers l'arrière, à partir du voile 64. Les ergots de fixation arrière 66 sont destinés à s'engager dans les orifices 54 de la platine.

La bride 22 comporte encore deux pattes de fixation avant 68, se dressant vers la face supérieure 44 à partir d'un bord avant de l'âme 58. Des lumières 69 sont ménagées au centre des pattes 68, en vue de coopérer avec les languettes 52 de la platine, comme le montre la figure 4.

La bride 22 comporte également sur ses deux ailes 60 deux fentes arquées 70.

Comme le montre la figure 1, les moyens de réglage en position 24 du corps de colonne comprennent une poignée de commande 72, un collier 74 rigidement fixé à la partie supérieure 12 du corps de colonne et dans lequel sont ménagées des rainures longitudinales non représentées, un tirant transversal 76 traversant les rainures arquées 70 et les rainures longitudinales du collier 74, et des moyens pour verrouiller de manière amovible le tirant 76 par rapport à la bride 22 et au collier 74. Les moyens pour fixer le tirant 76 ne sont pas représentés et sont commandés par la poignée 72.

Le collier 74 est engagé entre les deux ailes 60 de la bride, de manière qu'au moins une partie des rainures arquées 70 se trouve disposée en regard des rainures longitudinales du collier.

Par ailleurs, la platine 18 comprend deux pattes élastiques 78 opposées, disposées de part et d'autre de la bride 22 et pinçant cette bride 22 entre elles élastiquement. Les deux pattes 78 s'étendent à partir du bord supérieur 48 de la platine, et se raccordent sur les parties de ce bord 48 jouxtant les faces latérales 46 de la partie bombée. Elles s'étendent à partir du bord 48 longitudinalement vers le volant, en se rapprochant l'une de l'autre.

Les pattes 78 sont appliquées, par leurs extrémités libres opposées au bord 48, contre une partie 80 de la bride 22 qui fait saillie vers le volant au-delà du bord supérieur 48 de la platine. La partie 80 présente la même forme en U que le reste de la bride. Les pattes 78 sont appliquées contre des zones 82 de la partie 80 appartenant aux ailes 60 et situées en vis-à-vis l'une de l'autre.

On va maintenant détailler le fonctionnement de l'ensemble de colonne de direction décrit ci-dessus.

Comme le montre la figure 1, la bride 22 est normalement disposée sous la partie bombée 36 de la platine, les ergots de fixation arrière 66 étant engagés dans les orifices 54, les ergots transversaux 62 étant engagés dans les rainures 50 et étant situés à une extrémité supérieure de ces rainures tournée vers le volant. Dans cette position, les languettes 52 de la platine sont engagées dans les lumières 69 découpées dans les pattes de fixation avant de la bride. Après assemblage de la bride 22 dans la platine, l'extrémité libre des languettes 52 est légèrement repliée vers la face supérieure 44 de la partie bombée, de façon à bloquer en position longitudinalement les pattes de fixation avant 68 (figure 4).

La partie 80 de la bride fait saillie vers le volant par rapport au bord supérieur 48 de la platine, les deux pattes élastiques 78 étant en appui contre les zones 82 des ailes.

Le corps de colonne est disposé dans le canal 34 de la platine, les pions 56 étant engagés dans les rainures 42 de la platine. Le collier 74 est engagé entre les deux ailes 60 de la bride, le tirant 76 des moyens de réglage en position du corps de colonne traversant les rainures longitudinales du collier 74 et les rainures arquées 70 de la bride 22.

Ainsi, les ergots de fixation arrière 66 assurent le maintien en position du corps de colonne radialement par rapport à l'axe de l'arbre de direction. Ils contribuent également au maintien vertical du corps de colonne à l'arrière de la platine 18. Les ergots transversaux 62 sont emmanchés à force dans les rainures latérales 50 de la platine, et renforcent la rigidité latérale de la liaison entre la bride 22 et la platine 18. Par ailleurs, ils participent au guidage en translation longitudinale de la bride 22 par rapport à la platine 18.

Les pattes de fixation avant 68 assurent le maintien vertical de la bride 22 par rapport à la platine 18 vers l'avant de la platine, et bloquent longitudinalement la bride 22 après pliage des languettes 52.

Les ergots transversaux 62, les ergots de fixation arrière 66 et les pattes de fixation avant 68 d'une part sur la bride 22, les rainures latérales 50, les orifices 54 et les languettes 52 d'autre part sur la platine 18, forment ainsi des moyens de fixation libérable de la bride à la platine.

En vue de régler la position du corps de colonne 10 par rapport à la platine 18, un utilisateur agit sur la poignée 72 en vue de déverrouiller le tirant 76 par rapport à la bride 22 et au collier 74. S'il veut régler la position du corps de colonne en profondeur, c'est-à-dire suivant la direction longitudinale, il déplace le corps de colonne longitudinalement dans la direction appropriée, les pions 56 se déplaçant alors par rapport aux rainures 42. Le collier 74 se déplace avec le corps de colonne 10 longitudinalement, de telle sorte que les rainures longitudinales du collier 74 se déplacent par rapport au tirant 76.

Si l'utilisateur désire régler le corps de colonne 10 en orientation, il fait pivoter ensemble le corps de colonne 10, le collier 74 et le tirant 76 autour des pions 56, le tirant 76 se déplaçant alors le long des rainures arquées 70 de la bride. Les pions 56 restent dans la même position longitudinale par rapport aux rainures 42.

L'utilisateur reverrouille ensuite le tirant 76 par rapport à la bride 22 et au collier 74 en manoeuvrant la poignée 72.

En cas de choc longitudinal, dans un premier temps, le sous-ensemble formé par le volant, le tube supérieur 30 de l'arbre de direction 4, la partie supérieure 12 du corps de colonne, et le collier 74 se déplace longitudinalement par rapport au second sous-ensemble formé par la platine 18 et la bride 22. Les pions 56 glissent le long des rainures 42 jusqu'à arriver en butée aux extrémités des rainures 42 tournées à l'opposé du volant. De même, le tirant 76 se déplace le long des rainures longitudinales du collier 74 jusqu'à arriver en butée à l'extrémité de ces rainures opposée au volant 8. Ce déplacement a lieu dès que l'effort longitudinal exercé sur le volant dépasse environ 2000 Newtons.

Quand le pion 56 et le tirant 76 sont en butée et que l'effort sur le volant dépasse 6000 Newtons, la partie intermédiaire 14 du corps de colonne se rétracte par déformation des ponts de matière, de façon à absorber une partie de l'énergie du choc. La bride 22 se décroche de la platine 18. Les languettes 52 de la platine se désengagent des orifices 69 ménagés dans les pattes de fixation avant 68 de la bride, les ergots de fixation arrière 66 de la bride se dégagent des orifices 54. Le sous-ensemble formé de la bride 22, de la partie supérieure 12 du corps de colonne, du tube supérieur 30 de l'arbre de direction, du collier 74 et des moyens 24 de réglage en position du corps de colonne se déplace longitudinalement vers l'avant, c'est-à-dire vers la partie inférieure du corps de colonne 16. Au cours de ce mouvement, les ergots transversaux 62 de la bride coulissent dans les rainures 50. La partie arrière 80 de la bride rentre sous la partie bombée 36 de la platine, et se dégage du pincement des pattes 78.

L'ensemble de colonne de direction décrit ci-dessus présente de multiples avantages.

Du fait que la platine de fixation 18 comprend deux pattes 78 élastiques pinçant entre elles la bride 22, le comportement vibratoire de l'ensemble de colonne de direction est amélioré. Ces deux pattes permettent d'assurer un serrage supplémentaire de la bride 22, ce qui rigidifie la liaison entre la bride et la platine, et de ce fait déplace la fréquence propre de vibration de l'ensemble de colonne de direction.

Par ailleurs, en cas de sollicitation transversale sur la colonne de direction, le porte-à-faux entre le centre volant et la platine est réduit par les pattes 78. En effet, dans l'état de la technique, ce porte-à-faux correspondait à la distance p (figure 1) entre le bord supérieur 48 de la platine et le centre volant. Dans l'invention, ce porte-à-faux correspond à la distance p' entre le point de contact des pattes sur la bride 22 et le centre volant. Ce porte-à-faux est réduit, de telle sorte que la rigidité de l'ensemble de colonne de direction en cas de sollicitation transversale est améliorée.

De plus, du fait que les pattes 78 sont élastiques, le serrage de la bride 22 entre les deux pattes est insensible aux microdéplacements de la colonne de direction engendrés par les sollicitations vibratoires de cette même colonne.

Par ailleurs, du fait que les pattes 78 compriment entre elles la bride 22, les variations dimensionnelles des composants, en particulier celles entraînant une variation de l'écartement transversal entre les ailes 60 de la bride, n'ont que peu d'influence sur l'effort de serrage appliqué par les pattes 78 sur la bride 22, et n'ont donc pratiquement pas d'influence sur le processus de libération de la bride 22 par rapport à la platine 18, en cas de choc.

Ces différents avantages sont obtenus de manière particulièrement simple et peu coûteuse, à l'aide de deux pattes venues de matière avec la platine 18, et pouvant être obtenues par emboutissage et pliage de la platine.

L'ensemble de colonne de direction décrit ci-dessus peut présenter de multiples variantes.

La platine peut comporter plus de deux pattes élastiques, par exemple quatre pattes élastiques, disposées deux à deux de part et d'autre de la bride 22.

Les pattes élastiques 78 peuvent ne pas être en appui sur une partie de la bride 22 en saillie par rapport au bord supérieur de la platine, mais par exemple être en appui sur des zones des ailes 60 situées sous la partie bombée 36 de la platine. Toutefois, cette variante n'est pas préférée car elle ne réduit pas le porte-à-faux du volant.

Les pattes 78 peuvent ne pas porter contre les ailes 60 de la bride portant les rainures arquées 70, mais d'autres surfaces perpendiculaires à la direction transversale, qui peuvent être ménagées dans la bride 22 à d'autres endroits.

Les pattes élastiques 78 peuvent également porter sur des surfaces opposées qui ne sont pas perpendiculaires à la direction transversale, mais orientées différemment, par exemple des surfaces parallèles au plan P.

L'invention peut également s'appliquer au cas d'ensembles de colonne de direction comportant des corps de colonne non déformables, mais présente moins d'intérêt du fait que, dans ce cas, la bride 22 peut être liée à la platine par des moyens conférant à cette liaison une forte rigidité.

Les pattes élastiques 78 peuvent ne pas s'étendre longitudinalement à partir du bord 48 mais suivant une autre orientation, par exemple suivant une orientation perpendiculaire au plan P.

Les pattes 78, avant montage de la bride 22 sur la platine 18, peuvent être initialement relativement plus écartées l'une de l'autre, de façon à faciliter le montage de la bride 22. Une fois les ergots 66 engagés dans les orifices 54, les ergots 62 engagés dans les rainures 50 et les languettes 52 engagées dans les lumières 69, les pattes 78 sont déformées plastiquement dans le sens d'un rapprochement mutuel de façon à les plaquer sur les ailes de la bride et à pincer la bride entre les pattes. La déformation plastique des pattes est calculée de manière à ce que ces pattes, une fois déformées, exercent un serrage élastique sur la bride.

## Revendications

1. Ensemble (2) de colonne de direction de véhicule automobile, l'ensemble comprenant :
- un arbre de direction (4) d'axe longitudinal (X),
- un corps de colonne (10) à l'intérieur duquel la colonne de direction (4) est guidée en rotation autour de son axe (X), le corps de colonne comprenant des parties supérieure (12) et inférieure (16) alignées longitudinalement,
- une platine (18) de fixation du corps de colonne (10) sur une pièce de structure du véhicule, liée à la partie inférieure (16) du corps de colonne (10),
- une bride (22) de liaison entre la platine de fixation (18) et la partie supérieure (12) du corps de colonne (10),
**caractérisé en ce que** la platine de fixation (18) comprend au moins deux pattes élastiques (78) opposées disposées de part et d'autre de la bride (22) et pinçant la bride (22) entre elles.

2. Ensemble selon la revendication 1, **caractérisé en ce que** l'arbre de direction (4) est rétractable, le corps de colonne (10) comprenant une partie intermédiaire (14) déformable interposée longitudinalement entre les parties supérieure (12) et inférieure (16), l'ensemble (2) comprenant des moyens (54, 66, 68, 52) libérables de fixation de la bride (22) à la platine de fixation (18).

3. Ensemble selon la revendication 1 ou 2, **caractérisé en ce que** l'arbre de direction (4) est lié au volant (8) du véhicule par une extrémité supérieure (6), la bride (22) comprenant une partie (80) en saillie vers le volant (8) par rapport à la platine (18), les pattes élastiques (78) pinçant entre elles la partie en saillie (80) de la bride (22).

4. Ensemble selon la revendication 3, **caractérisé en ce que** la partie en saillie (80) de la bride (22) présente une section en U dans un plan perpendiculaire à l'axe longitudinal (X) et chevauche la partie supérieure (12) du corps de colonne (10), la partie en saillie (80) comprenant une âme centrale (58) et deux ailes (60) opposées solidaires de l'âme centrale (58), les deux pattes élastiques (78) étant appliquées contre les ailes (60).

5. Ensemble selon la revendication 3 ou 4, **caractérisé en ce que** les pattes (78) s'étendent sensiblement longitudinalement, à partir d'un bord supérieur (48) de la platine (18) délimitant la platine (18) vers le volant (8).

6. Ensemble selon l'une quelconque des revendications 1 à 5, **caractérisé en ce que** les pattes élastiques (78) sont venues de matière avec la platine (18).

7. Ensemble selon l'une quelconque des revendications précédentes, **caractérisé en ce que** les pattes élastiques (78) pincent la bride (22) suivant une direction perpendiculaire à la direction longitudinale.

8. Ensemble selon l'une quelconque des revendications précédentes, **caractérisé en ce que** les pattes élastiques (78) pincent la bride (22) suivant une direction transversale par rapport au sens de déplacement normal du véhicule.

9. Véhicule automobile comprenant un ensemble de colonne de direction (2) selon l'une quelconque des revendications 1 à 8.

## Claims

1. Motor vehicle steering column assembly (2), the assembly comprising:
- a steering shaft (4) with a longitudinal axis (X),
- a column body (10), inside which the steering column (4) is rotationally guided about its axis (X), the column body comprising upper (12) and lower (16) parts aligned longitudinally,
- a plate (18) for fastening the column body (10) to a structural part of the vehicle, connected to the lower part (16) of the column body (10),
- a flange (22) for connection between the fastening plate (18) and the upper part (12) of the column body (10),
**characterised in that** the fastening plate (18) comprises at least two opposed elastic tabs (78), arranged on either side of the flange (22) and gripping the flange (22) between them.

2. Assembly according to Claim 1, **characterised in that** the steering shaft (4) is retractable, the column body (10) comprising a deformable intermediate part (14), longitudinally interposed between the upper part (12) and lower part (16), the assembly (2) comprising releasable means (54, 66, 68, 52) of fastening the flange (22) to the fastening plate (18).

3. Assembly according to Claim 1 or 2, **characterised in that** the steering shaft (4) is linked to the vehicle steering wheel (8) at an upper end (6), the flange (22) comprising a part (80) protruding towards the steering wheel (8) relative to the plate (18), the elastic tabs (78) gripping between them the protruding part (80) of the flange (22).

4. Assembly according to Claim 3, **characterised in that** the protruding part (80) of the flange (22) has a U section in a plane perpendicular to the longitudinal axis (X) and straddles the upper part (12) of the column body (10), the protruding part (80) comprising a central web (58) and two opposed wings (60) integral with the central web (58), the two elastic tabs (78) being applied against the wings (60).

5. Assembly according to Claim 3 or 4, **characterised in that** the tabs (78) run substantially longitudinally from an upper edge (48) of the plate (18) defining the plate (18) towards the steering wheel (8).

6. Assembly according to any of claims 1 to 5, **characterised in that** the elastic tabs (78) are made in one piece with the plate (18).

7. Assembly according to any of the preceding claims, **characterised in that** the elastic tabs (78) grip the flange (22) following a direction perpendicular to the longitudinal direction.

8. Assembly according to any of the preceding claims, **characterised in that** the elastic tabs (78) grip the flange (22) following a direction transverse in relation to the normal direction of travel of the vehicle.

9. Motor vehicle comprising a steering column assembly (2) according to any of claims 1 to 8.

## Patentansprüche

1. Lenksäulenanordnung (2) für Kraftfahrzeug, wobei die Anordnung umfasst:
- eine Lenkwelle (4) mit longitudinaler Achse (X),
- einen Säulenkörper (10), in dem die Lenkwelle rotatorisch um ihre Achse (X) geführt wird, wobei der Säulenkörper einen oberen Teil (12) und einen unteren Teil (16), die longitudinal ausgerichtet sind, enthält,
- eine Platte (18) für die Befestigung des Säulenkörpers (10) an einem Strukturelement des Fahrzeugs, die mit dem unteren Teil (16) des Säulenkörpers (10) verbunden ist,
- einen Verbindungsflansch (22) zwischen der Befestigungsplatte (18) und dem oberen Teil (12) des Säulenkörpers (10),
**dadurch gekennzeichnet, dass** die Befestigungsplatte (18) wenigstens zwei elastische Ansätze (78) umfasst, die beiderseits des Flansches (22) einander gegenüber angeordnet sind und den Flansch (22) zwischen sich einklemmen.

2. Anordnung nach Anspruch 1, **dadurch gekennzeichnet, dass** die Lenkwelle (4) zurückziehbar ist, wobei der Säulenkörper (10) einen verformbaren Zwischenteil (14) umfasst, der in Längsrichtung zwischen dem oberen Teil (12) und dem unteren Teil (16) eingefügt ist, wobei die Anordnung (2) freigebbare Mittel (54, 66, 68, 52) für die Befestigung des Flansches (22) an der Befestigungsplatte (18) umfasst.

3. Anordnung nach Anspruch 1 oder 2, **dadurch gekennzeichnet, dass** die Lenkwelle (4) über ein oberes Ende (6) mit dem Lenkrad (8) des Fahrzeugs verbunden ist, wobei der Flansch (22) einen Teil (80) aufweist, der in Bezug auf die Platte (18) zum Lenkrad (4) vorsteht, wobei die elastischen Ansätze (78) den vorstehenden Teil (80) des Flansches (22) zwischen sich einklemmen.

4. Anordnung nach Anspruch 3, **dadurch gekennzeichnet, dass** der vorstehende Teil (80) des Flansches (22) in einer Ebene senkrecht zur Längsachse (X) einen U-förmigen Querschnitt aufweist und mit dem oberen Teil (12) des Säulenkörpers (10) überlappt, wobei der vorstehende Teil (80) einen mittigen Kern (58) und zwei mit dem mittigen Kern (58) fest verbundene, gegenüberliegende Flügel (60) aufweist, wobei die zwei elastischen Ansätze (78) gegen die Flügel (60) gedrängt werden.

5. Anordnung nach Anspruch 3 oder 4, **dadurch gekennzeichnet, dass** sich die Ansätze (78) ausgehend von einem die Platte (18) begrenzenden oberen Rand (48) der Platte (18) im Wesentlichen in Längsrichtung zum Lenkrad (8) erstrecken.

6. Anordnung nach einem der Ansprüche 1 bis 5, **dadurch gekennzeichnet, dass** die elastischen Ansätze (78) einteilig mit der Platte (18) ausgebildet sind.

7. Anordnung nach einem der vorhergehenden Ansprüche, **dadurch gekennzeichnet, dass** die elastischen Ansätze (78) den Flansch (22) in einer Richtung senkrecht zur Längsrichtung einklemmen.

8. Anordnung nach einem der vorhergehenden Ansprüche, **dadurch gekennzeichnet, dass** die elastischen Ansätze (78) den Flansch (22) in einer Richtung einklemmen, die zur normalen Bewegungsrichtung des Fahrzeugs quer orientiert ist.

9. Kraftfahrzeug, das eine Lenksäulenanordnung (2) nach einem der Ansprüche 1 bis 8 enthält.
